# EUROPEAN PATENT SPECIFICATION

(11) **EP 1 810 846 B1**
(45) Date of publication and mention of the grant of the patent: **14.10.2009**
(21) Application number: 07001544.1
(22) Date of filing: 24.01.2007
(51) Int. Cl.: B60B 27/00, F16C 33/62

(54) **Hub unit**
Nabeneinheit
Unité de concentrateur

(30) Priority: 24.01.2006 JP 2006015325
(43) Date of publication of application: 25.07.2007
(73) Proprietor: JTEKT Corporation, Osaka-shi Osaka 542-8502 (JP)
(72) Inventor: Fujiwara, Arihiro, Osaka-shi Osaka 542-8502 (JP)
(74) Representative: Schaeberle, Steffen

(56) References cited:
- GB-A- 2 121 120
- JP-A- 11 051 064
- US-A1- 2002 126 926

## Description

### BACKGROUND OF THE INVENTION

### 1. Field of the Invention

The present invention relates to a hub unit, according to the preamble of claim 1 and as it is disclosed in US 2002 012 6926 A.

### 2. Related Art

Conventionally, hub units for mounting a wheel and a brake disc are used on vehicles such as automobiles. When vehicles such as automobiles are transported by cargo-trains or boats etc., minute vibrations are subjected to hub units mounted on the vehicles, whereby fretting wear is generated, producing wear dust, this producing false brinelling on raceway portions. Then, wear dust is oxidized to become iron oxide, and iron oxide so produced promotes the wear further, resulting in expansion of false brinelling.

As preventive measures, clearance filling is implemented. In addition, a technique is disclosed in which a high-frequency heat treatment is applied to a portion on a surface area of a hub wheel which lies from an inner ring raceway surface to a root portion of a flange so as to form a hardened portion thereon (JP-A-11-51064).

When a vehicle equipped with a hub unit in which false brinelling was generated by fretting wear during transportation is run, abnormal noise is generated. While false brinelling affects the life of a hub unit, such a clearance filling by itself cannot suppress sufficiently the occurrence of fretting wear. Further, the hardening treatment as suggested in JP-A-11-51064 calls for an increase in production costs.

### SUMMARY OF THE INVENTION

A problem that the invention is to solve is to provide a hub unit which reduces the generation of iron dioxide by reducing the amount of oxygen in the interior of the hub to thereby prevent the occurrence of fretting wear due to vibrations occurring during transportation so as to prevent the generation of false brinelling on a bearing raceway portion.

With a view to solving the problem, according to the invention, there is provided a hub unit having the features of claim 1.

According to the configuration described above, since the hub unit includes the absorbing portion, the hub unit can absorb oxygen within the interior space. Because of this, the oxidation of wear dust resulting from fretting wear can be prevented, thereby making it possible to prevent the expansion of false brinelling.

To describe specifically, the cover may include an absorbent accommodating portion for accommodating an absorbent which absorbs oxygen into an interior space of the absorbent accommodating portion serving as the absorbing portion. By the absorbent accommodating portion in the cover, the absorbent is accommodated in the absorbent accommodating portion, so that the absorbent accommodating portion can be made as the absorbing portion, whereby oxygen within the interior space can be absorbed by the absorbent accommodated therein.

In addition, the cover can also be formed as the absorbing portion by containing therein an absorbent which absorbs oxygen. Namely, by forming the cover in such a manner as to contain therein the absorbent, the cover can be made as the absorbing portion, whereby oxygen within the interior space can be absorbed.

Furthermore, the cover can be configured so as to be applied with a paint to which an absorbent is added which absorbs oxygen on at least a principal surface on the interior space side thereof to thereby form the absorbing portion. With this configuration, since the paint to which the absorbent is added is just applied to the cover, the fabrication of the cover is facilitated, whereby oxygen within the interior space can be absorbed.

A deoxygenating agent can be used as the absorbent, whereby oxygen within the interior space can be absorbed.

### BRIEF DESCRIPTION OF THE DRAWINGS

Fig- 1 is a sectional view showing a hub unit of Embodiment 1 of the invention.
Fig. 2 is a sectional view showing a hub unit of Embodiment 2 of the invention.
Fig. 3 is a diagram showing a cover of Embodiment 3 of the invention.
Fig. 4 is a diagram showing a cover of Embodiment 4 of the invention.

### DETAILED DESCRIPTION OF THE PREFERRED EMBODIMENTS

Hereinafter, embodiments of the invention will be described by reference to the drawings.

### (Embodiment 1)

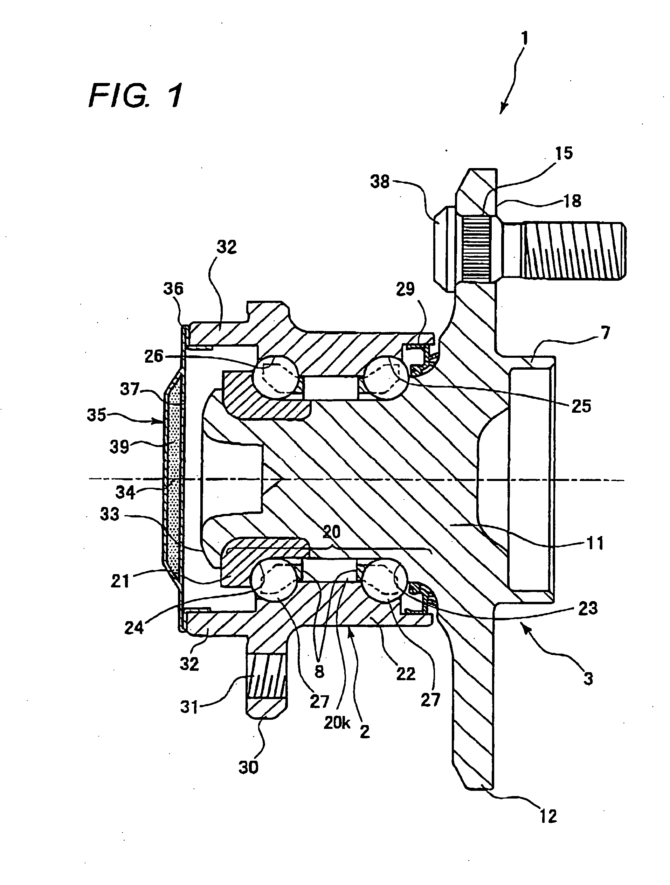

Fig. 1 is a sectional view of a hub unit 1 of this embodiment. Note that a right-hand side of the figure denotes a vehicle-outer side and a left-hand side denotes a vehicle-inner side. As is shown in Fig. 1, the hub unit 1 is configured to include a rolling bearing (an outer ring member) 2 and a hub wheel (an inner ring member) 3 which is disposed concentrically with the rolling bearing 2.

The hub wheel 3 has a shaft portion 11 and a hub flange 12 to which a wheel and a brake disc are fixed. The rolling bearing 2 which is made up of an angular ball bearing is mounted on an outer circumference of the shaft portion 11. The hub flange 12 is projected in a radial direction from an end portion of an outer circumferential surface of the hub wheel 3 which lies on a vehicle-outer side.

The rolling bearing 2 includes an inner ring 21 which is pressed onto the outer circumference of the shaft portion 11 at a portion lying on the vehicle-inner side and is then fixed thereto by a caulking portion 33 so as to make up a rotating raceway and an outer ring 22 which makes up a stationary ring. In addition, the rolling bearing 2 includes two rows of balls 27 which are arranged rollingly along inner ring raceways 23, 24 which are formed on the shaft portion 11 and the inner ring 21, respectively, and outer ring raceways 25, 26 which are formed on the outer ring 22, crown-type cages 8 which retain the rows of balls 27, respectively, and a seal member 29 which is fixed to the outer ring 22 on the side of the hub flange 12 so as to be interposed between the outer ring 22 and the shaft portion 11.

The inner ring, which lies on the outer (the hub flange 12) side of the vehicle, is formed integrally with the shaft portion 11 of the hub wheel 3 while forming the inner ring raceway 23 on the shaft portion 11. The inner ring 21, which lies on the inner side of the vehicle, is formed separately from the shaft portion 11.

Through holes 15 are formed in predetermined positions in the hub flange 12 of the hub wheel 3 for hub bolts 38 to be passed therethrough. In addition, a guide portion (a coupling rib portion) 7 which functions to position a brake disc rotor and a wheel when they are mounted is formed on a mounting surface of the hub flange 12 which constitutes a vehicle-outer side thereof in such a manner as to project axially from a principal surface of a flange portion to the vehicle-outer side, so that the brake disc rotor and the wheel are positioned by this coupling rib portion 7, and the hub bolts 38 are passed through the through holes 15, whereby the brake disc rotor and the wheel are fixed to the hub flange 12 by the thread engagement of the hub bolts 38 with mating nuts.

The outer ring 22 is made of a carbon steel through hot forging, and an outer ring flange portion 30 is provided on the outer ring 22 projecting from an outer circumferential surface thereof. Bolt through holes 31 are formed on the outer ring flange portion 30. An outer ring coupling rib portion 32 is projected on the outer ring flange portion 30 toward the vehicle-inner side for positioning the hub unit 1 relative to the vehicle body, and bolts are passed through the bolt through holes 31 in the outer ring flange portion 30 so that the outer ring 22 is knuckle fixed, whereby the hub unit 1 is fixed to the vehicle body. Then, the wheel is rotatably supported relative to the vehicle body via the rolling bearing 2.

The hub unit 1 is used on a driven wheel side of the vehicle body, and a cover 35 is mounted on an end portion of the hub unit 1 which lies on the vehicle-inner side, whereby air is sealed in a rolling element arranging space 20k formed by a rolling element arranging space defining portion 20 in a semi-hermetically closed state by the seal member 29 and the cover 35 so that air is not allowed to flow out into an exterior space. The seal member 29, which is provided at the vehicle-outer side end portion of the outer ring 22, is formed as an elastic seal element, so that the seal member 29 is fixed to the outer ring 22 at one end thereof and is tightly secured to the hub wheel 3 at the other end while being deformed elastically, thereby allowing air to be sealed in the rolling element arranging space 20k in the semi-hermetically closed state. In addition, the seal member 29 functions not only to maintain the sealed state between the outer ring 22 and the hub wheel 3 but also to prevent the intrusion of water from the exterior space into the rolling element arranging space 20k. Namely, the seal member 29 doubles as a water intrusion preventive member.

The cover 35 has a stopper portion 36 which is formed on a radially outside side thereof and is mounted on an inner circumferential surface of the outer ring coupling rib portion 32. An absorbent accommodating portion 39 is formed on the cover 35 for accommodating therein an absorbent 34 which is a deoxygenating agent (an oxygen absorbent) which includes an oxygen absorbing material, and the absorbent 34 such as the deoxygenating agent (the oxygen absorbing agent) is accommodated in the absorbent accommodating portion 39. In addition, an interior space of the cover 35 is formed as an air permeating portion 37 through which air can pass, so that air inside the interior space passes through the air permeating portion 37 to be absorbed by the absorbent 34. Consequently, the absorbent accommodating portion 39 which has the absorbent 34 (the deoxygenating agent) functions as the absorbing portion.

The deoxygenating agent (the oxygen absorbent) is such as to have a function to absorb ambient oxygen, and by disposing this deoxygenating agent within a tightly closed space, air within the space can be absorbed to be removed thereby.

There is no specific limitation on the oxygen absorbing material contained in the deoxygenating agent, provided that a material used is such as to absorb oxygen, and any kind of oxygen absorbing material, whether organic or inorganic, may be used. For example, an iron-based deoxygenating agent can be used.

There is no specific limitation on the iron-based deoxygenating agent, provided that a surface of the iron is exposed, and hence, iron powder (reduced iron powder, electrolyzed iron powder, atomized iron powder and the like), ferrous iron and the like can be used.

In addition, as organic deoxygenating agents, for example, ascorbic acids, ascorbic acid salts, porphyrin complexes, macrocyclic polyamine complexes and the like can be used.

Since the cover 35 includes the absorbent accommodating portion 39 which accommodates the absorbent 34 in this way, the absorbent 34 in the absorbent accommodating portion 39 absorbs oxygen in air within the interior space to thereby prevent the oxidation of wear dust generated due to fretting wear, thereby making it possible to prevent the expansion of false brinelling.

### (Embodiment 2)

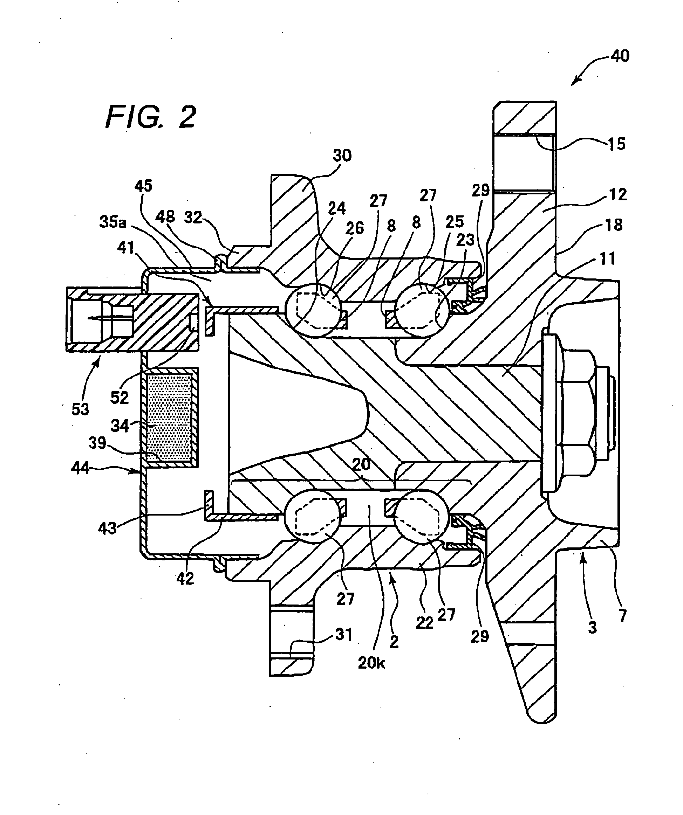

Fig. 2 shows a hub unit 40 of Embodiment 2. Note that a right-hand side of the figure denotes a vehicle-outer side, and a left-hand side denotes a vehicle-inner side. As is shown in Fig. 2, the hub unit 40 is configured to include a rolling bearing (an outer ring member) 2 and a hub wheel (an inner ring member) 3 which is disposed concentrically with the rolling bearing 2. The details of the hub unit 40 are similar to the hub unit 1 of Embodiment 1, and therefore, the description thereof will be omitted here.

In the hub unit 40, a sensor rotor 41 having a detectable portion is pressed onto and fixed to the hub wheel 3. In addition, a cover 44 on which a magnetic sensor 53 as a rotary detector is provided is pressed in an outer ring 22. The cover 44 has a stopper portion 48 which is formed on a radially outward side of a cylindrical portion 45 which is formed into a cylindrical shape and is mounted on an inner circumferential surface of an outer ring coupling rib portion 32. The sensor rotor 41 is made up of an annular core metal 42 and a magnetic material 43. In addition, the magnetic sensor 53 is made up of a magnetic detector element 52 and the like. The rotational speed and rotational direction of the wheel are detected by this rotary detector.

The cover 44 is constructed to have an absorbent accommodating portion 39 which is projected into an interior space defined therein, so that an absorbent 34 can be accommodated therein. In Embodiment 2, since the magnetic sensor 53 is provided on the cover 44, the cover 44 is projected towards the vehicle-inner side so as to form a larger inner space than that of Embodiment 1, and because of this, the absorbent accommodating portion 39 is formed larger than that of Embodiment 1, thereby making it possible to enhance the oxygen absorbing efficiency. Deoxygenating agents used here are similar to those of Embodiment 1.

Since the cover 44 includes the absorbent accommodating portion 39 which accommodates the absorbent 34 in this way, the absorbent 34 in the absorbent accommodating portion 39 absorbs oxygen in air within the interior space to thereby prevent the oxidation of wear dust generated due to fretting wear, thereby making it possible to prevent the expansion of false brinelling. Note that the configuration of the absorbent accommodating portion 39 is not limited to that of the embodiment, and hence, any shape may be adopted as long as it constitutes no obstacle in the interior space.

### (Embodiment 3)

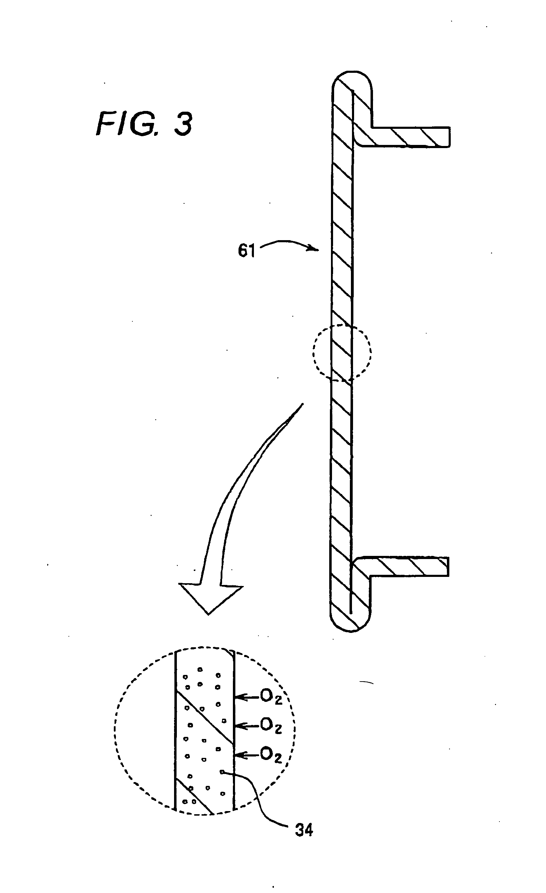

Fig. 3 shows a cover 61 which is formed to have an absorbent 34 mixed therein. The cover 61, which is made of a resin, is formed to have mixed therein the absorbent 34 which is a deoxygenating agent selected from those that will be described below. The cover 61 is desirably formed in such a manner that the absorbent 34 is mixed therein at least on an inner interior space side of the cover 61. This cover 61 is provided on, for example, the hub unit 1, 40 of Embodiment 1 or Embodiment 2.

As deoxygenating agents, for example, salts such as sodium sulfites, potassium sulfites and ascorbic acid salts (sodium L-ascorbic acid and the like) and acids such as L-ascorbic acids, L-sorbic acids, hydroxylcarboxylic acids and the like can be used. In addition, polymeric compounds having polyphenol can also be used.

Metal-based deoxygenating agents include, as metallic powder having reduction nature, iron powder such as reduced iron powder, atomized iron powder, electrolyzed iron powder and the like, reduced tin powder and reduced zinc powder, as oxides, iron oxide, triiron tetraoxide and the like, and as metallic compounds, iron carbide, silicone iron, carbonyl iron, iron hydroxide and the like can be used.

As iron powders, any iron powder can be used irrespective of its purity, provided that it can cause an oxygen absorbing reaction, and for example, an iron of which part of a surface has already been oxidized or an iron which contains other metal may also be used.

As resins, thermoplastic resins can be used, Any of the deoxygenating agents is added to a molten thermoplastic resin for kneading. By forming the cover 61 by mixing the deoxygenating agents in the resins, the cover 61 is allowed to have an oxygen absorbing capability. There is no specific limitation on thermoplastic resins used, but those are preferable which have a high hydrophilic nature with the deoxygenating agents.

Since oxygen in air in the interior space can be absorbed by the hub unit 1, 40 including the cover 61 which is formed to have the deoxygenating agent mixed therein, the oxidization of wear dust produced due to fretting wear can be prevented, thereby making it possible to prevent the expansion of false brinelling. Even though there is no space where an absorbent accommodating portion 39 is formed, the cover 61 which is formed by mixing the deoxygenating agent therein can absorb oxygen in air. Furthermore, an absorbent accommodating portion 39 may be formed on the cover 61 which is formed to have the deoxygenating agent mixed therein. By adopting this configuration, a higher oxygen absorbing effect can be obtained, whereby the oxidization of wear dust produced due to fretting wear can be prevented, thereby making it possible to prevent the expansion of false brinelling.

### (Embodiment 4)

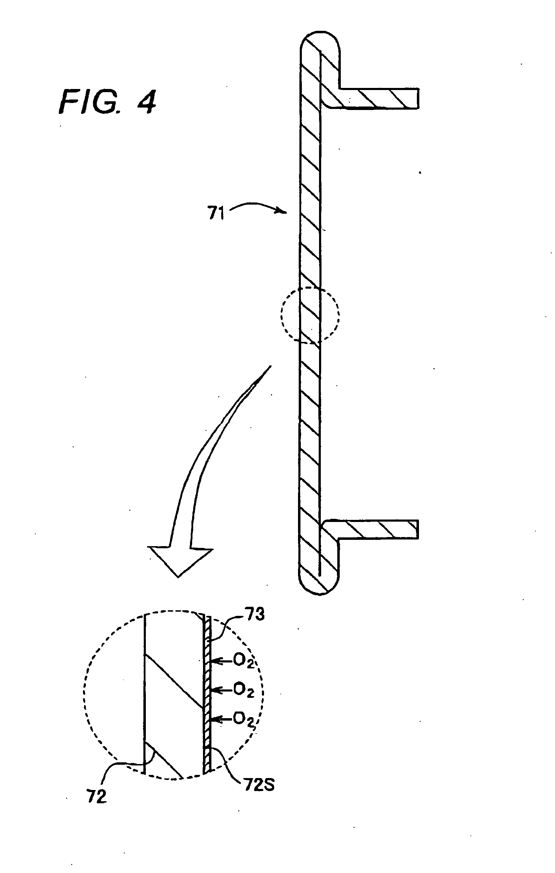

Fig. 4 shows a cover 71 of Embodiment 4. The cover 71 has a main body portion 72 which is formed of a resin, and a paint into which a deoxygenating agent is mixed (hereinafter, referred to simply as a paint) is applied to a principal surface 72s on an inner space side of the main body portion 72 so as to form a paint layer 73 thereon. This cover 71 is provided on, for example, the hub unit 1, 40 of Embodiment 1 or Embodiment 2.

The paint layer 73 is made up of a base material 7 which is a synthetic resin such as polyester, polypropylene or nylon, and a deoxygenating agent functioning as an absorbent 34 is dispersed in the base material. As deoxygenating agents, as with the embodiments that have been described above, metal powders having reduction nature such as reduced iron powder and reduced zinc powder can be used.

Since oxygen in air in the interior space can be absorbed by the hub unit 1, 40 including the cover 71 on which the paint layer 73 is formed by applying the paint into which the deoxygenating agent is mixed to the interior space side thereof, the oxidization of wear dust produced due to fretting wear can be prevented, thereby making it possible to prevent the expansion of false brinelling. Even though there is no space where an absorbent accommodating portion 39 is formed, the cover 71 to which the paint into which the deoxygenating agent is mixed is applied can absorb oxygen in air. Furthermore, since the cover 71 can be prepared by applying the paint into which the deoxygenating agent is mixed to thereto, there occurs no case where the production costs are increased.

Note that the formation of the paint layer 73 by the application of the paint into which the absorbent 34 is mixed can be implemented not only on to the cover 71 but also on to the shaft portion 11 and the inner circumferential surface of the coupling rib portion 32.

Furthermore, a higher oxygen absorbing effect can be obtained by forming the paint layer 73 through the application of the paint into which the absorbent 34 is mixed to the principal surface on the interior space side of the cover 35 which includes the absorbent accommodating portion 39 which accommodates the absorbent 34, whereby the oxidization of wear dust produced due to fretting wear can be prevented, thereby making it possible to prevent the expansion of false brinelling.

In the embodiments that have been described heretofore, the constructions are described in which the deoxygenating agent is provided within the rolling element arranging space 20k so as to prevent the fretting wear which is generated by the existence of oxygen in the rolling element arranging space 20k. However, since water contained in air also constitutes a cause for fretting wear, in order to obtain a much higher fretting wear preventive effect, in addition to the deoxygenating agent, a drying agent or the like may be provided further.

## Claims

1. A hub unit (1) comprising:
an outer ring member (2) which is stationarily attached to a main body of a vehicle; and
a hub wheel (3) which is attached to a wheel of the vehicle and is disposed concentrically and rotatably with respect to the outer ring member (2) around an axis of the hub wheel (3) via rolling elements (27) such that a rolling element arranging space (20) is defined between the outer ring member (2) and the hub wheel (3) along an axial direction of the hub wheel (3);
a seal member (29) interposed for sealing between the outer ring member (2) and the hub wheel (3) on a vehicle-outer side of the outer ring member;
a cover (35) disposed on a vehicle-inner side of the outer ring member (2) isolating an interior space of the hub unit containing the rolling element arranging space (20) from an exterior space; **characterized in that** said cover (3) includes
an absorbing portion (39) absorbing oxygen in air within said interior space of the hub unit (1).

2. The hub unit according to Claim 1, wherein the cover (35) includes an absorbent accommodating portion (39) for accommodating an absorbent (34) which absorbs oxygen into an interior space of the absorbent accommodating portion (39) serving as the absorbing portion.

3. The hub unit according to Claim 1, wherein the cover (35) is formed as the absorbing portion by containing therein an absorbent (34) which absorbs oxygen.

4. The hub unit according to Claim 1, wherein the cover (35) is applied with a paint containing an absorbent (34) which absorbs oxygen on at least a principal surface on the interior space side thereof to thereby form the absorbing portion.

5. The hub unit according to Claim 2, wherein the absorbent (34) is a deoxygenating agent.

## Patentansprüche

1. Nabeneinheit (1), umfassend:
ein Außenringelement (2), das feststehend an einem Hauptkörper eines Fahrzeugs befestigt ist; und
ein Nabenrad (3), das an einem Rad eines Fahrzeugs befestigt ist und konzentrisch und drehbar in Bezug auf das Außenringelement (2) um eine Achse des Nabenrads (3) über Wälzkörper (27) angeordnet ist, so dass ein Wälzkörper-Anordnungsraum (20) zwischen dem Außenringelement (2) und dem Nabenrad (3) entlang einer axialen Richtung des Nabenrads (3) definiert wird;
ein Dichtungselement (29), das zum Abdichten zwischen dem Außenringelement (2) und dem Nabenrad (3) auf einer Fahrzeugaußenseite des Außenringelements angeordnet ist;
eine Abdeckung (35), die auf einer Fahrzeuginnenseite des Außenringelements (2) angeordnet ist, wobei ein Innenraum der Nabeneinheit, der den Wälzkörper-Anordnungsraum (20) enthält, von einem Außenraum isoliert ist, **dadurch gekennzeichnet, dass** die Abdeckung (35) einen Absorptionsbereich (39) umfasst, der Sauerstoff in der Luft innerhalb des Innenraums der Nabeneinheit (1) absorbiert.

2. Nabeneinheit nach Anspruch 1, wobei die Abdeckung (35) einen Absorptionsmittel-Aufnahmebereich (39) zum Aufnehmen eines Absorptionsmittels (34) umfasst, das Sauerstoff in einen Innenraum des Absorptionsmittel-Aufnahmebereichs (39), der als der Absorptionsbereich dient, absorbiert.

3. Nabeneinheit nach Anspruch 1, wobei die Abdeckung (35) als der Absorptionsbereich ausgebildet ist, indem darin ein Absorptionsmittel (34) enthalten ist, das Sauerstoff absorbiert.

4. Nabeneinheit nach Anspruch 1, wobei auf die Abdeckung (35) eine Farbe, welche ein Absorptionsmittel (34) enthält, aufgebracht ist, welches Sauerstoff auf zumindest einer Hauptoberfläche auf der Innenraumseite davon absorbiert, um somit den Absorptionsbereich zu bilden.

5. Nabeneinheit nach Anspruch 2, wobei das Absorptionsmittel (34) ein Sauerstoff entfernendes Mittel ist.

## Revendications

1. Unité formant moyeu (1) comprenant :
un élément annulaire externe (2) qui est fixé à demeure sur une carrosserie d'un véhicule ; et
une bride de moyeu (3) qui est fixée à une roue du véhicule et est disposée de manière concentrique et avec liberté de rotation par rapport à l'élément annulaire externe (2) autour d'un axe de la bride de moyeu (3) par l'intermédiaire d'éléments formant roulement (27) de telle sorte qu'un espace d'agencement d'élément formant roulement (20) est défini entre l'élément annulaire externe (2) et la bride de moyeu (3) suivant une direction axiale de la bride de moyeu (3) ;
un élément d'étanchéité (29) interposé afin d'assurer l'étanchéité entre l'élément annulaire externe (2) et la bride de moyeu (3) d'un côté externe au véhicule de l'élément annulaire externe ;
un couvercle (35) disposé d'un côté interne au véhicule de l'élément annulaire externe (2) isolant un espace intérieur de l'unité formant moyeu contenant l'espace d'agencement d'élément formant roulement (20) par rapport à un espace extérieur ;
**caractérisée en ce que** ledit couvercle (35) comporte :
un partie absorbante (39) absorbant l'oxygène de l'air à l'intérieur dudit espace intérieur de l'unité formant moyeu (1).

2. Unité formant moyeu selon la revendication 1, dans laquelle le couvercle (35) comporte une partie de réception d'agent absorbant (39) destinée à recevoir un agent absorbant (34) qui absorbe l'oxygène dans un espace intérieur de la partie de réception d'agent absorbant (39) servant de partie absorbante.

3. Unité formant moyeu selon la revendication 1, dans laquelle le couvercle (35) est formé comme la partie absorbante en intégrant à l'intérieur un agent absorbant (34) qui absorbe l'oxygène.

4. Unité formant moyeu selon la revendication 1, dans laquelle le couvercle (35) est revêtu d'une peinture contenant un agent absorbant (34) qui absorbe l'oxygène sur au moins une surface principale du côté de l'espace intérieur de ce dernier afin de former ainsi la partie absorbante.

5. Unité formant moyeu selon la revendication 2, dans laquelle l'agent absorbant (34) est un agent de désoxygénation.
